(19) **Europäisches Patentamt / European Patent Office / Office européen des brevets**

(11) **EP 1 932 858 A1**

(12) **EUROPEAN PATENT APPLICATION**

(43) Date of publication:
**18.06.2008 Bulletin 2008/25**

(51) Int Cl.:
*C08B 31/06* (2006.01)  *C08B 35/00* (2006.01)
*C07H 13/00* (2006.01)

(21) Application number: **06025517.1**

(22) Date of filing: **11.12.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicants:
- **Koninklijke Coöperatie Cosun U.A.**
  **4818 ND Breda (NL)**
- **Thermphos Trading GmbH**
  **6300 Zug (CH)**

(72) Inventors:
- **Raaijmakers, Harry W.C.**
  **4708 NP Roosendaal (NL)**

- **Van Bree, Jan H.J**
  **3040 Ottenburg (BE)**
- **Devaux, Albert**
  **1345 Mont-saint-Guibert (BE)**
- **Notte, Patrick P.**
  **1300 Wavre (BE)**

(74) Representative: **Isenbruck, Günter et al**
**Isenbruck, Bösl, Hörschler, Wichmann, Huhn Patentanwälte**
**Theodor-Heuss-Anlage 12**
**68165 Mannheim (DE)**

(54) **Sugar phosphonates**

(57) Novel sugar phosphonates are disclosed containing a sugar moiety selected from selected polysaccharides, saccharides which are free of aldehyde and keto groups, sugar alcohols and monosaccharides and a phosphonate moiety selected from an alkylphosphonate and an alkylamino phosphonate. The novel compounds can be used beneficially in numerous established "phosphonate" applications including textile treatment, water treatment and oil recovery.

EP 1 932 858 A1

**Description**

This invention relates to novel sugar phosphonate compounds. The carbohydrate moiety in the compounds is selected from polysaccharides, saccharides which are substantially free of aldehyde and/or keto groups, sugar alcohols and monosaccharides having protected anomeric centers. The phosphonate moiety is represented by hydrocarbon substituted phosphonic acid species or hydrocarbon substituted amino phosphonic acid species. The number of phosphonate moieties in the carbohydrate is dictated by structural limitations and/or by the aim to optimize the potential application benefits of the compounds of the invention.

The phosphonic acid chemistry is well known and documented and phosphonic acids/phosphonates have been used extensively in a variety of well known applications. Carbohydrates, including numerous substitutes, are equally well known in the relevant technical domain and have been used commercially. The prior art is thus, as one can expect, well established with respect to the individual moieties and to substitutes/derivatives thereof. EP 0 917 541 pertains to a process for separating heavy metals from a mixture with a fructan derivative containing complexing groups such as sulphated inulin derivatives and carboxymethylamino species containing phospho and thiophospho groups.

US 4,260,738 describes starch ether derivatives containing aminophosphonic acid groups, namely either one or two anionic methylene phosphonic acid groups, bound to a cationic nitrogen. The starch derivative is said to exhibit cationic or anionic properties which (properties) may be increased by introducing selected groups together with the aminophosphonic acid reagent. The starch derivatives can be used beneficially as pigment retention aids in paper making processes. US 4,297,299 pertains to novel N-(alkyl)-N-(2-haloethyl)-aminomethylene phosphonic acids exhibiting desirable pigment retention properties upon use in paper making processes.

EP 1 094 890 discloses carboxyl-containing fructans having desirable dispersing properties for solid substances, such as pigments. Suitable fructans include oligosaccharides and polysaccharides having a majority of anhydrofructose units. EP1 093 541 concerns a method for controlling and/or preventing scale formation, particularly barium, strontium and calcium scale, within the context of oil extracting activities. To that effect, carboxyl-containing inulins and other carboxyl-containing fructans containing 0.3 to 3 carboxyl groups per monosaccharide unit can be used. EP 1 060 135 relates to a process for controlling and/or preventing scale formation during sugar production. For that purpose, a carboxyalkylfructan containing from 0.5 to 3 carboxyl moieties per monosaccharide unit can be used whereby at least 0.4 of the carboxyl groups are represented by carboxyalkyl groups. EP 0 814 088 discloses acylated carboxyalkyl saccharides having at least one of the carboxyalkyl groups etherified with the carbohydrate. The acylated compounds can be prepared starting from a monosaccharide, a disaccharide, a trisaccharide or a polysaccharide.

EP 0 025 830 divulges starch ether derivatives containing amino-diphosphonic or amino monophosphonic acid groups and modified zwitterionic derivatives containing, in addition to the phosphonic acid groups, cationic or anionic groups. The starch derivatives can be used as pigment retention aids in paper processing. US 4,243,479 concerns starch ether derivatives, the preparation thereof and their use in paper. The starch can be reacted with N-alkyl-N-(2-haloethyl) amino methylene phosphonic acid. The starch reaction product can contain the amino diphosphonic acid as well as the amino monophosphonic acid. EP 0 401 833 describes specifically-defined aminophosphonate polymers, possibly diphosphonate species; the reaction products can be used as dispersants, as corrosion inhibitors and as scale inhibitors in water treatment. The polymer, which can be derived from acrylic or methacrylic acid, is reacted with a phosphonate halohydrin or with an epoxide phosphonate.

While the individual starting reactant moieties, which can be reacted to yield the sugar phosphonates, have been used extensively, it was recognized that the application functionalities of these starting reactants were limited considering prevailing constraints, specifically in requiring superior performance while mitigating environmental, economical and other constraints.

It is a main object of this invention to generate novel sugar phosphonate compounds suitable for use in a variety of established and developmental applications. Still another object of this invention aims at providing novel agents capable of exhibiting desirable properties upon use in a broad range of applications. Yet another object of this invention aims at providing novel phosphonate compounds which can easily and efficiently be synthesized starting from selected reaction partners. Still a further object of this invention aims at combining selected phosphonate moieties and selected sugars to thus yield novel compounds tailored for providing desirable application benefits.

The foregoing and other objects of the invention can now be met by the provision of specific sugar phosphonates.

The term "percent" or "%" as used throughout this application stands, unless defined differently, for "percent by weight" or "% by weight". The terms "phosphonic acid" and "phosphonate" are also used interchangeably depending, of course, upon medium prevailing alkalinity/acidity conditions thus e.g. alkali metal and/or earth alkali metal salts of phosphonic acid can be present under alkaline conditions. "DP" means degree of polymerization; "ds" stands for dry substance; and "DS" means degree of substitution. "DE" means dextrose equivalent. The molecular weight (MW) of the polysaccharides is expressed in "Dalton" and is abbreviated (k)Da.

Novel sugar phosphonates, which can be used effectively in a series of applications, have now been discovered. In more detail the inventive sugar phosphonates have the formula:

$$T - (B)_a$$

wherein T is a carbohydrate selected from the group of:

polysaccharides having a MW of up to 350 kDa, selected from the group of: cellulose; starch; fructan; galactomannan; agar; chitosan; arabinogalactan; xylan; alginic acid and derivatives thereof selected from carboxyl; carboxyalkyl with from 1 to 6 carbon atoms in the alkyl chain; and $C_2$-$C_8$ linear or branched hydroxyalkyl substituents; with a being from 0.01 to 3, expressed on the basis of the monosaccharide unit in the polysaccharide;

saccharides, which are substantially free of aldehyde and keto groups, with a being from 1 to 11;

sugar alcohols with a being from 1 to 9; and

monosaccharides having protected anomeric centers with a being a number from 1 to 4;

B is a phosphonate moiety selected from the group of:

(i) $\qquad$ -X-PO$_3$M$_2$;

and

(ii) $\qquad$ -X-N(W) (ZPO$_3$M$_2$);

wherein X is selected from $C_2$-$C_{50}$ linear, branched, cyclic or aromatic hydrocarbon chain, optionally substituted by a $C_1$-$C_{12}$ linear, branched, cyclic, or aromatic group, (which chain and/or which group can be) optionally substituted by OH, COOH, F, OR' and SR' moieties, wherein R' is a $C_1$-$C_{12}$ linear, branched, cyclic or aromatic hydrocarbon chain; and [A-O]$_x$-A wherein A is a $C_2$-$C_9$ linear, branched, cyclic or aromatic hydrocarbon chain and x is an integer from 1 to 200; provided that when the carbohydrate moiety is starch, X is $C_3$-$C_{50}$ with the additional proviso that when X is substituted by OH, the latter moiety can be attached to any carbon atom other than the second carbon atom starting from the linking nitrogen or oxygen of the carbohydrate moiety;

Z is a $C_1$-$C_6$ alkylene chain;

M is selected from H and $C_1$-$C_{20}$ linear, branched, cyclic or aromatic hydrocarbon chains;

W is selected from H, ZPO$_3$M$_2$ and [V-N(K)]$_n$K, wherein V is selected from: a $C_2$-$C_{50}$ linear, branched, cyclic or aromatic hydrocarbon chain, optionally substituted by $C_1$-$C_{12}$ linear, branched, cyclic or aromatic groups, (which chains and/or groups are) optionally substituted by OH, COOH, F, OR' or SR' moieties wherein R' is a $C_1$-$C_{12}$ linear, branched, cyclic or aromatic hydrocarbon chain; and from [A-0]$_x$-A wherein A is a $C_2$-$C_9$ linear, branched, cyclic or aromatic hydrocarbon chain and x is an integer from 1 to 200; and

K is ZPO$_3$M$_2$ or H and n is an integer from 0 to 200.

The carbohydrate T moiety can be represented by polysaccharides, having a MW of up to about 350 kDa, selected from the group of: cellulose; starch; fructan; galactomannan; agar; chitosan; arabinogalactan; xylan; alginic acid; and derivatives thereof selected from; carboxyl; carboxyalkyl with from 1 to 6 carbon atoms in the alkyl chain; and $C_2$-$C_8$ linear or branched hydroxyalkyl substituents.

Suitable polysaccharide species have a MW of up to about 350 kDa. It is known that the MW of the individual polysaccharides per sé can e.g. in natural state be substantially higher than about 350 kDa. If such a polysaccharide is selected containing a higher MW (than 350 kDa) then it is obvious that a hydrolysate of the selected polysaccharide shall be used or that the polysaccharide polymer shall be depolymerised in a manner routinely known in the relevant domain. The lower number of monosaccharide units is structure induced and thus can the lower limit of the MW vary, in a known manner, depending upon the selected species. The term "about" in relation to the MW can mean up to 20% of 350 kDa i.e. up to 420 kDa, preferably up to 10 % of 350 kDa i.e. up to 390 kDa. The number (a) of phosphonate moieties bound to the polysaccharide T is within the range of from 0.01 to 3, expressed on the basis of the monosaccharide unit in the polysaccharide.

The cellulose polysaccharide has a MW of from 500 Da to 350 kDa. Cellulose is a linear polymer of β-(1→4)-D-glucopyranose units; it may contain sub-additive levels of arabinoxylans.

The starch polysaccharide has a MW of from 700 Da to 350 kDa. Starch consists of amylose and amylopectin which both consist of $\alpha$-D-glucose units. Amylose consists of mostly unbranched chains of $\alpha$-1$\rightarrow$4-linked-D-glucose units whereas amylopectin is formed by non-random $\alpha$-1$\rightarrow$6 branching of the amylose-type structure. Starch is found in wheat, potatoes, tapioca and corn.

The fructan polysaccharide for use herein comprise all oligo- and poly-saccharides which have a majority of anhydrofructose units. Fructans can have a polydisperse chain length distribution and can be straight-chain or branched. They may be linked by $\beta$-2,1 bonds as in inulin or by $\beta$-2,6 bonds as in levan. Suitable fructans comprise both products obtained directly from a vegetable or other source and products in which the average chain length has been modified (increased or reduced) by fractionation, enzymatic synthesis or hydrolysis. The fructans have an average chain length (DP) of at least 3 up to about 1000. Suitable fructans have a MW from 500 Da to 350 kDa, preferably from 500 Da to 15 kDa, in particular of from 600 Da to 12 kDa. A particularly preferred fructan is inulin -$\beta$-2,1 fructan- or a modified inulin.

Galactomannan has a MW of from 800 Da to 350 kDa. Galactomannan is found in locust bean gum and contains primarily D-galacto-D-mannoglycan with varying ratios of D-galactose to D-mannose in the range from about 1 : 4 to 1 : 10. Galactomannan originating from guaran differs slightly from the material originating from locust bean gum in that the guaran material has a larger number of D-galactosyl units in the side chains.

The agar polysaccharide has a MW of from 600 Da to 350 kDa. Agar is believed to predominantly consist of repeating units of alternating $\beta$-D-galactopyranosyl and 3,6-anhydro-$\alpha$-L-galactopyranosyl units. Its systematic name is: (1$\rightarrow$4)-3,6-anhydro-$\alpha$-L-galactopyranosyl-(1$\rightarrow$3)-$\beta$-D-galactopyran,

Chitosan having a MW of from 500 Da to 350 kDa is a linear polymer of $\beta$-(1$\rightarrow$4)-linked 2-amino-2-deoxy-D-glucose (D-glucosamine) residues. Polysaccharides containing amino groups, such as D-glucosamine units, constitute preferred species for use herein. Such compounds containing D-glucosamine are particularly preferred considering the convenient formation of the corresponding phosphonates by routinely converting the N-H bonds of the amino group. A specific example of a polysaccharide containing D-glucosamine is chitosan which can be enzymatically hydrolyzed to the corresponding oligosaccharide

Suitable arabinogalactan polysaccharides have a MW of from 1000 Da to 350 kDa. Arabinogalactan is composed of D-galactopyranose and L-arabinofuranose residues in the form of a $\beta$-(1$\rightarrow$3)-galactan main chain with side chains made up of galactose and arabinose units of various lengths. The ratio of D-galactose to L-arabinose can vary e.g. from 5 : 1 to 25 : 1. Arabinogalactan is a water-soluble gum found in concentrations up to 35% in the heartwood of larch.

Xylan polysaccharides for use herein has a MW of from 800 Da to 350 kDa. Xylans consist of a backbone of $\beta$-(1$\rightarrow$4)-D-xylopyranosyl units. According to the type and amount of substituents, arabinoxylans (varying in the amount of single unit side chains of $\alpha$-L-arabinofuranose attached to the O-3 or both the 0-2 and 0-3 of the xylosyl residues), 4-O-methylglucuronoxylans (with $\alpha$-(1$\rightarrow$2)-linked (4-O-methyl)glucoronosyl substituents) and arabino-glucuronoxylans can be distinguished. The xylosyl residues may additionally be acetylated at the 0-2 or 0-3 position. Xylans are generally present in lignified tissues or in the cell walls of cereals.

Alginic acid polysaccharides herein have a MW of from 800 Da to 350 kDa. The alginate molecule is a linear copolymer of $\beta$-D-(1$\rightarrow$4)-linked mannopyranosyluronic acid units and $\alpha$-L-(1$\rightarrow$4)-linked gulopyranosyluronic acid units. These (homo)polymeric units are linked together by segments that have a predominantly alternating copolymer composition.

The polysaccharide for use herein is most preferably represented by species of the group of: cellulose; starch; fructan; chitosan; and the derivatives thereof selected from; carboxyl; carboxyalkyl with from 1 to 6 carbon atoms in the alkyl chain; and $C_2$-$C_8$ hydroxyalkyl substituents. The number (a) of phosphonate moieties bound to a polysaccharide of the group of starch, cellulose and chitosan is preferably of from 0.05 to 2 whereas if the polysaccharide is fructan a can preferably vary of from 0.05 to 2.5. In one particular execution, a fructan polysaccharide is used with a being of from 0.5 to 2.

The carbohydrate can also be represented by saccharides which are substantially free of aldehyde and/or keto groups. Such saccharides are also known as non-reducing sugars. Well known and preferred species of such non-reducing sugars include sucrose with a being from 1 to 8, trehalose with a being from -1 to 8 and raffinose with a being from 1 to 11.

Monosaccharides having protected anomeric centers, with a being from 1 to 4, are well known in the technical domain. Monosaccharides with protected anomeric centers are usually called glycosides. The monosaccharide per sé can be represented by known species such as glucose, fructose, mannose, galactose, xylose and arabinose. Suitable monosaccharide species having protected anomeric centers can optionally contain amino groups such as D-glucosamine. The protecting group of the anomeric center is called the "aglycon" and can be represented by $C_1$-$C_{50}$ linear, branched, cyclic or aromatic hydrocarbon chains, optionally substituted by OH, COOH, NR'$_2$, OR', SR' or A'O-[A-O]$_x$-moieties wherein A is a $C_2$-$C_9$ linear, branched, cyclic or aromatic hydrocarbon chain, x is 1-100 and A' is selected from $C_1$-$C_{50}$, preferably $C_1$-$C_{30}$, linear, branched, cyclic or aromatic hydrocarbon chains, optionally substituted by a $C_1$-$C_{12}$ linear, branched, cyclic, or aromatic group, (which chain and/or which group can be) optionally substituted by OH, COOH, F, OR' and SR' moieties, wherein R' has the meaning given above. The aglycon is connected to the monosaccharide via an oxygen atom, to thus form an acetal group, or via an S atom or an N atom to thus yield S-glycosides and N-glycosides respectively. Preferred species for use herein include $C_1$-$C_{30}$ linear alkyl glycosides and benzyl glycosides. Particularly preferred species are represented by $C_1$-$C_{16}$ linear, branched, cyclic or aromatic glycosides, such as aglycon species selected from methyl, ethyl, octyl, benzyl and dodecyl glycosides.

Sugar alcohols with a being from 1 to 9 are well known and have found widespread commercial application. Preferred species of such sugar alcohols can be represented by sorbitol with a being from 1 to 6, anhydro-sorbitol with a being from 1 to 4, iso-sorbide with a being from 1 to 2, mannitol with a being from 1 to 6, erythritol with a being from 1 to 4, xylitol with a being from 1 to 5, lactitol with a being from 1 to 9 and isomalt with a being from 1 to 9. Particularly preferred species of such sugar alcohols are represented by sorbitol with a being from 1 to 6, iso-sorbide with a being from 1 to 2, anhydro-sorbitol with a being from 1 to 4, and mixtures of said sorbitol and said mannitol, with a being from 1 to 6, in ponderal ratios of 5 : 1 to 1 : 5, especially from 2 : 1 to 1 : 2.

The phosphonate moiety in the sugar phosphonate is selected from the group of: $-X-PO_3M_2$; and $-X-N-(W)(ZPO_3M_2)$ ; wherein the structural elements have the meaning recited above. The sugar phosphonates can be synthesized, in a conventional manner, by reacting the sugar, a precursor of the selected sugar moiety, with a precursor of the selected phosphonate moiety selected from the group of:

(i)          $Y-X-PO_3M_2$;

and

(ii)          $Y-X-N(W)(ZPO_3M_2)$ ;

wherein Y is selected from: substituents the conjugated acid of which has a pKa equal to or smaller than 4.0. In preferred executions, the pKa is equal to or smaller than 1.0.

The pKa value is a well known variable which can be expressed as follows:

$$pKa = -\log_{10}Ka.$$

wherein Ka represents the thermodynamic equilibrium acidity constant. The pKa values of all acid substances are known from the literature or can, if this were needed, be determined conveniently.

Y can preferably be selected from Cl, Br, I, $HSO_4$, $NO_3$, $CH_3SO_3$ and p-toluene sulfonic acid and mixtures thereof.

The individual radicals in the phosphonate compound can, in a preferred manner, be beneficially selected from species as follows:

| Moiety | Preferred | Most Preferred |
| --- | --- | --- |
| X | $C_2$-$C_{30}$ $[A-O]_x$-A | $C_2$-$C_{12}$ $[A-O]_x$-A |
| V | $C_2$-$C_{30}$ $[A-O]_x$-A | $C_2$-$C_{12}$ $[A-O]_x$-A |

wherein for both, X and V independently,

| | | |
| --- | --- | --- |
| A | $C_2$-$C_6$, | $C_2$-$C_4$ |
| x | 1-100 | 1-100 |
| z | $C_1$-$C_3$ | $C_1$ |
| M | H, $C_1$-$C_6$ | H, $C_1$-$C_4$ |
| n | 1-100 | 1-25 |

A sugar phosphonate compound having an OH substituent attached to the second, starting from the linking nitrogen or oxygen of the carbohydrate moiety, carbon atom of X is not a phosphonate in the meaning of this invention.

Preferably, a sugar phosphonate herein shall not carry an OH substituent attached to any one of the second, third or fourth, starting from the linking nitrogen or oxygen of the carbohydrate moiety, carbon atom of X.

The individual radicals of the monosaccharides having protected anomeric centers can preferably be selected from the following species.

| Moiety | Preferred | Most Preferred |
|--------|-----------|----------------|
| Aglycon | $C_1$-$C_{30}$ | $C_1$-$C_{12}$ |
| A | $C_1$-$C_6$ | $C_1$-$C_4$ |
| A' | $C_1$-$C_{30}$ | $C_1$-$C_{12}$ |
| x | 1-100 | 1-100 |

The sugar phosphonates herein can be prepared by means of conventional measures routinely available in the relevant domain. In one approach, the phosphonate moiety compound and a sugar can be combined, in an aqueous medium, by adding stoichiometric proportions of both species, thereby taking into consideration the required degree of substitution. A process for the manufacture of the sugar phosphonates of Claim 1 comprises reacting a phosphonate compound selected from Y-X-N(W) (ZPO$_3$M$_2$) and Y-X-PO$_3$M$_2$ wherein Y is a substituent the conjugated acid of which has a pKa equal to or smaller than 4, preferably equal to or smaller than 1, with a carbohydrate selected from the group of: polysaccharides having a MW of up to about 350 kDa and with a being from 0.01 to 3, based on the monosaccharide units of the polysaccharide; saccharides, which are substantially free of aldehyde and keto groups, with a being from 1 to 11; sugar alcohols with a being from 1 to 9; and monosaccharides having protected anomeric centers, containing optionally amino groups, with a being from 1 to 4; in aqueous medium, having a pH of 7 or higher, frequently a pH in the range of from 8-14, at a temperature generally above 0°C, usually in the range of from 10 °C to 200 °C, preferably 50 °C to 140 °C. Higher reaction temperatures can be used subject to adequate pressure containment e.g. by means of standard pressure vessels. The pH value is measured in the reaction medium at the reaction temperature.

The sugar phosphonates technology of this invention is illustrated by the following testing data, Examples I-VII:

I :
8.55g (0.025 mole) of sucrose were mixed with 10g (0.125 mole) of 50% aqueous sodium hydroxide solution, 25g of water and 0.2g (0.0012 mole) of potassium iodide. To this solution was added under stirring 7.037g (0.025 mole) of 3-chloro propyl imino bis(methylene phosphonic acid). The mixture was heated under reflux for 10 hours. $^{31}$P NMR analysis showed that 66% of the propyl imino bis(methylene phosphonic acid) moiety was attached to sucrose and that 28% of the 3-chloro imino bis(methylene phosphonic acid) had been converted to the corresponding hydroxy derivative with about 3% of the chloro azetididium equivalent of the 3-chloro propyl imino bis(methylene phosphonic acid).

II:
A solution of potassium iodide (4.5 g, 27 mmol) in water (206 g) was heated to 70°C. During heating of this solution, inulin (150 g, 0.93 mol, average DP = 25) was added. Then chloropropyliminobismethylenephosphonic acid (CPIBMPA,152 g, 0.54 mol) was slowly added in portions over a period of 90 minutes while maintaining the pH at 11.5 by the simultaneous addition of aqueous sodium hydroxide (50%, 218 g, 2,73 mol). The reaction mixture was kept for another 6h at 80°C and then cooled to room temperature. The degree of substitution of the inulin phosphonate in the crude reaction mixture was determined using $^{31}$P, $^{13}$C and $^1$H-NMR as 0.39, which corresponds with a reaction efficiency of 67%.

III:
A solution of CPIBMPA (197 g, 0.70 mol) in water (207 g) was heated to 70°C and neutralised with aqueous sodium hydroxide (177 g, 2.21 mol). Then inulin (150 g, 0.93 mol, average DP = 25) and potassium iodide (5.8 g, 35 mmol) was added. The reaction mixture was heated to 80°C and the pH was adjusted to and maintained at 12 using aqueous sodium hydroxide (50%, 280 g, 3.49 mol). The reaction mixture is heated for another 6-7 h at 80 °C and then cooled to room temperature. The degree of substitution of the inulin phosphonate in the crude reaction mixture was determined using $^{31}$P, $^{13}$C and $^1$H NMR as 0.52, which corresponds to a reaction efficiency of 69%.
The crude reaction mixture, DS=0.52, was purified by membrane filtration (G5 membrane, General Electric, MW cut off = 500 Dalton (Da)) using a diafiltration factor of 4. This gave a purified inulin phosphonate, having a DS of 0.6. The inulin phosphonate was characterised using $^{31}$P, $^{13}$C, and $^1$H-NMR.

IV:
A solution of potassium iodide (21 g, 130 mmol) in water (193 g) was heated to 80°C. During heating of this solution inulin (140 g, 0.82 mol, average DP = 25) was added. Then CPIBMPA (367.4 g, 1.26 mol) was slowly added in portions over a period of 120 minutes, while maintaining the pH at 11.5 by the simultaneous addition of aqueous sodium hydroxide (50%, 512 g, 6.4 mol). The reaction mixture was kept for another 16h at 80°C and then cooled to room temperature and the pH was adjusted to 9 using aqueous hydrochloric acid (6N). The degree of substitution of the inulin phosphonate in the crude reaction mixture was determined using $^{31}$P, $^{13}$C and $^1$H-NMR as 1.2, which corresponds with a reaction efficiency of 78 %.
773 g (ds = 45.3%) of the crude reaction mixture was purified by membrane filtration (G5 membrane, General Electric, MW cut off = 500 Da) using a diafiltration factor of 4. This gave (1273g ds = 13.0%) of purified inulin phosphonate. The inulin phosphonate was further characterised, using $^{31}$P, $^{13}$C, and $^1$H-NMR, as having a DS of 1.1

V:
A solution of potassium iodide (17.9 g, 108 mmol) in water (183 g) was heated to 80°C in 15 minutes. During heating of this solution sucrose (120 g, 0.35 mol, average DP = 25) was added. Then CPIBMPA (304.3 g, 1.08 mol) was slowly added in portions over a period of 120 minutes, while maintaining the pH at 11.5 by the simultaneous addition of aqueous sodium hydroxide (50%, 440 g, 5.5 mol). The reaction mixture was kept for another 16h at 80°C, cooled to room temperature and the pH was adjusted to 9 using aqueous hydrochloric acid (6N). The degree of substitution of the sucrose phosphonate in the crude reaction mixture was determined using $^{31}$P, $^{13}$C and $^1$H-NMR as 2.1 ( per sucrose molecule) which corresponds with a reaction efficiency of 68 %.

VI:
A solution of potassium iodide (20.6 g, 124 mmol) in water (97 g) was heated to 80°C. During heating of this solution inulin (70 g, 0.41 mol, average DP = 25) was added. Then CPIBMPA (361 g, 1.24 mol) was slowly added in portions over a period of 120 minutes, while maintaining the pH at 11.5 by the simultaneous addition of aqueous sodium hydroxide (50%, 500 g, 6.25 mol). The reaction mixture was kept for another 16h at 80°C and then cooled to room temperature and the pH was adjusted to 9 using aqueous hydrochloric acid (6N). The crude reaction mixture was purified by membrane filtration in the manner described in example III to give a purified inulin phosphonate, which was characterised using $^{31}$P, $^{13}$C and $^1$H-NMR. The DS amounted to 1.52 which corresponds to a reaction efficiency of 50%.

VII:
A solution of potassium iodide (16.6 g, 0.1 mol) in water (154 g) was heated to 80°C. During heating of this solution sorbitol (106 g, 0.58 mol) was added. Then CPIBMPA (281 g, 1.00 mol) was slowly added in portions over a period of 120 minutes, while maintaining the pH at 11.5 by the simultaneous addition of aqueous sodium hydroxide (50%, 408 g, 5.1 mol). The reaction mixture was kept for another 16h at 80°C and then cooled to room temperature and the pH was adjusted to 9 using aqueous hydrochloric acid (6N). The DS of the sorbitol phosphonate was determined using $^{31}$P, $^{13}$C and $^1$H-NMR as 1.1 which corresponds to a reaction efficiency of 64%.

VIII:
A solution of potassium iodide (8.8g; 53 mmol.) was heated to 80 °C. During the heating of this solution, maltodextrin (64.2g; 0.35 mol; Passelli excel, DE = 2.6) was added. Then CPIBMPA (155.2g; 0.534 mol.) was slowly added in portions over a period of 120 minutes, while maintaining the pH at 11.5 by the simultaneous addition of aqueous sodium hydroxide (50 %; 216g; 2.7 mol.). The reaction mixture was kept for another 16 hours at 80 °C and then cooled to room temperature and the pH was adjusted to 9 using aqueous hydrochloric acid (6 N). The DS of the crude reaction mixture was determined using $^{31}$P, $^{13}$C and $^1$H-NMR as 0.8, which corresponds to a reaction efficiency of 53%.
DE = Dextrose Equivalent.

**Claims**

1. A sugar phosphonate having the formula

$$T - (B)_a$$

wherein T is a carbohydrate selected from the group of:

polysaccharides having a molecular weight of up to about 350 kDa, selected from the group of: cellulose; starch; fructan; galactomannan; agar; chitosan; arabinogalactan; xylan; alginic acid and derivatives thereof selected from carboxyl; carboxyalkyl with from 1 to 6 carbon atoms in the alkyl chain; $C_2$-$C_8$ linear or branched hydroxylalkyl substituents; with a being from 0.01 to 3 expressed on the basis of the monosaccharide unit in the polysaccharide; saccharides, which are substantially free of aldehyde and keto groups, with a being from 1 to 11; sugar alcohols with a being from 1 to 9; and monosaccharides having protected anomeric centers with a being from 1 to 4; B is a phosphonate moiety selected from the group of:

(i) $-X-PO_3M_2$;

and

$-X-N(W) (ZPO_3M_2)$; (ii)

wherein X is selected from $C_2$-$C_{50}$ linear, branched, cyclic or aromatic hydrocarbon chain, optionally substituted by a $C_1$-$C_{12}$ linear, branched, cyclic, or aromatic group, (which chain and/or which group can be) optionally substituted by OH, COOH, F, OR' and SR' moieties, wherein R' is a $C_1$-$C_{12}$ linear, branched, cyclic or aromatic hydrocarbon chain; and $[A-O]_x$-A wherein A is a $C_2$-$C_9$ linear, branched, cyclic or aromatic hydrocarbon chain and x is an integer from 1 to 200; provided that when the carbohydrate moiety is starch, X is $C_3$-$C_{50}$ with the additional proviso that when X is substituted by OH, the latter moiety can be attached to any carbon atom other than the second carbon atom starting from Y; Z is a $C_1$-$C_6$ alkylene chain; M is selected from H and $C_1$-$C_{20}$ linear, branched, cyclic or aromatic hydrocarbon chains; W is selected from H, $ZPO_3M_2$ and $[V-N(K)]_nK$, wherein V is selected from: a $C_2$-$C_{50}$ linear, branched, cyclic or aromatic hydrocarbon chain, optionally substituted by $C_1$-$C_{12}$ linear, branched, cyclic or aromatic groups, (which chains and/or groups are) optionally substituted by OH, COOH, F, OR' or SR' moieties wherein R' is a $C_1$-$C_{12}$ linear, branched, cyclic or aromatic hydrocarbon chain; and from $[A-O]_x$-A wherein A is a $C_2$-$C_9$ linear, branched, cyclic or aromatic hydrocarbon chain and x is an integer from 1 to 200; and K is $ZPO_3M_2$ or H and n is an integer from 0 to 200.

2. The phosphonate in accordance with Claim 1 wherein the carbohydrate moiety is a polysaccharide selected from cellulose, starch and chitosan with a being from 0.05 to 2 and fructan with a being from 0.05 to 2.5.

3. The phosphonate in accordance with Claim 1
wherein the carbohydrate moiety is selected from sucrose with a being from 1 to 8, trehalose with a being from 1 to 8 and raffinose with a being from 1 to 11.

4. The phosphonate in accordance with Claims 1 or 2
wherein the carbohydrate moiety is inulin β-2,1 fructan with a being from 0.5 to 2.

5. The phosphonate in accordance with Claim 1 wherein the carbohydrate is selected from sorbitol with a being from 1 to 6, anhydro-sorbitol with a being from 1 to 4, iso-sorbide with a being from 1 to 2, mannitol with a being from 1 to 6, erythritol with a being from 1 to 4, xylitol with a being from 1 to 5, lactitol with a being from 1 to 9 and isomalt with a being from 1 to 9.

6. The phosphonate in accordance with Claim 1 wherein the individual elements in the phosphonate moiety are selected from the following species: X and V are independently $C_2$-$C_{30}$ or $[A-O]_x$-A, wherein for both, X and V independently, A is $C_2$-$C_6$ and x is 1-100; Z is $C_1$-$C_3$; M is H $C_2$-$C_6$ and n is 1-100.

7. The phosphonate in accordance with Claims 1 through 5 wherein the individual elements in the phosphonate moiety are selected from the following species: X and V are independently $C_2$-$C_{12}$ or $[A-O]_x$-A wherein for both, X and V independently, A is $C_2$-$C_4$ and x is 1-100; Z is $C_1$; M is $C_2$-$C_4$ or H; and n is 1-25.

8. The phosphonate in accordance with claims 1 and 5
wherein the carbohydrate moiety is selected from sorbitol with a being from 1 to 6, iso-sorbide with a being from 1 to 2, anhydro-sorbitol with a being from 1 to 4, and mixtures of said sorbitol and said mannitol, with a being from 1 to 6, in ponderal ratios (sorbitol/mannitol) of 5 : 1 to 1 : 5.

9. The phosphonate in accordance with Claim 1 wherein the carbohydrate is a monosaccharide, with a being from 1 to 4, having a protected anomeric center, wherein the monosaccharide is selected from: glucose; D-glucosamine; fructose; mannose; galactose; xylose; and arabinose; and

wherein the protecting group can be selected from $C_1$-$C_{50}$ linear, branched, cyclic or aromatic hydrocarbon chains, optionally substituted by OH, COOH, NR'$_2$, OR', SR' or A'O-[A-O]$_x$- moieties wherein A is a $C_2$-$C_9$ linear, branched, cyclic or aromatic hydrocarbon chain, x is 1-100 and A' is selected from $C_1$-$C_{50}$, linear, branched, cyclic or aromatic hydrocarbon chains, optionally substituted by a $C_1$-$C_{12}$ linear, branched, cyclic, or aromatic group, (which chain and/or which group can be) optionally substituted by OH, COOH, F, OR' and SR' moieties, wherein R' has the meaning given above.

10. The phosphonate in accordance with Claims 1 and 9 wherein the protective anomeric group of the carbohydrate is selected from $C_1$-$C_{12}$ linear, branched, cyclic or aromatic glycosides.

11. A process for the manufacture of the sugar phosphonates of Claim 1 by reacting a phosphonate selected from the group of:

$$Y\text{-}X\text{-}N \text{ (W) } (ZPO_3M_2) \text{ ;}$$

and

$$Y\text{-}X\text{-}N \text{ (W) } (ZPO_3M_2) \text{ ;}$$

wherein Y is a substituent the conjugated acid of which has a pKa equal to or smaller than 4 and X, W, Z and M have the meaning as defined above with a carbohydrate selected from the group of:

polysaccharides having a molecular weight of up to about 350 kDa, selected from the group of: cellulose; starch; fructan; galactomannan; agar; chitosan; arabinogalactan; xylan; alginic acid and derivatives thereof selected from carboxyl; carboxyalkyl with from 1 to 6 carbon atoms in the alkyl chain; $C_2$-$C_8$ linear or branched hydroxylalkyl substituents; with a being from 0.01 to 3, expressed on the basis of the monosaccharide unit in the polysaccharide; saccharides, which are substantially free of aldehyde and keto groups, with a being from 1 to 11; sugar alcohols with a being from 1 to 9; and monosaccharides containing protected anomeric centers with a being from 1 to 4; in aqueous medium having a pH of 7 or higher at a temperature in the range of from 0°C to 200 °C, followed by recovering the sugar phosphonate in a manner known per sé.

12. The process in accordance with Claim 11 wherein the temperature is in the range of from 50 °C to 140 °C and the pH is in the range of from 8 to 14.

13. The process in accordance with Claim 11 wherein Y is selected from the group of Cl, Br, I, $HSO_4$, $NO_3$, $CH_3SO_3$, p-toluene sulfonic acid and mixtures thereof.

14. The process in accordance with Claim 13 wherein the reaction is conducted in the presence of an alkali metal iodide in a molar ratio of the A reactant to the iodide of from 5000 : 1 to 1 : 1.

**European Patent Office**

## EUROPEAN SEARCH REPORT

Application Number

EP 06 02 5517

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 553 194 A (VERBANAC FRANK ET AL) 5 January 1971 (1971-01-05) claims; examples III, IV | 1,2,4,6, 7,11-14 | INV. C08B31/06 C08B35/00 C07H13/00 |
| X | EP 0 061 686 A2 (HOECHST AG [DE]) 6 October 1982 (1982-10-06) claims; example 7-10 | 1,2,4,6, 7,11-14 | |
| X | US 4 276 414 A (TESSLER MARTIN M) 30 June 1981 (1981-06-30) column 2, line 47 - line 49; claims; example II | 1,2,4,6, 7,11-14 | |
| Y | EP 0 051 182 A1 (HOECHST AG [DE]) 12 May 1982 (1982-05-12) * examples 1-3 * | 1,2,4,6, 7,11-14 | |
| Y | EP 1 260 522 A1 (LINIFICIO E CANAPIFICIO NAZ S [IT]) 27 November 2002 (2002-11-27) * the whole document * | 1,2,4,6, 7,11-14 | |
| Y,D | EP 0 025 830 A1 (NAT STARCH CHEM CORP [US]) 1 April 1981 (1981-04-01) claims; examples II, V, VI, VII, VIII, IX | 1,2,4,6, 7,11-14 | TECHNICAL FIELDS SEARCHED (IPC) C08B C07H |
| Y,D | US 4 260 738 A (TESSLER MARTIN M) 7 April 1981 (1981-04-07) claims; examples II, V, VI, VII, VIII, IX | 1,2,4,6, 7,11-14 | |
| X | FR 2 795 955 A (OREAL [FR]) 12 January 2001 (2001-01-12) pages 3,4; claims 1,2 | 1,2,4,6, 7,11-14 | |

~~The present search report has been drawn up for all claims~~

| Place of search | Date of completion of the search | Examiner |
|---|---|---|
| Munich | 24 May 2007 | Nikolai, Joachim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

Application Number

EP 06 02 5517

## CLAIMS INCURRING FEES

The present European patent application comprised at the time of filing more than ten claims.

☐ Only part of the claims have been paid within the prescribed time limit. The present European search report has been drawn up for the first ten claims and for  those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

see annex

**European Patent Office**

## LACK OF UNITY OF INVENTION
## SHEET B

Application Number

EP 06 02 5517

The Search Division considers that the present European patent application does not comply with the requirements of unity of invention and relates to several inventions or groups of inventions, namely:

1. claims: 1(part),2,4,6(part),7(part),11-14(parts)

   Phosphonate derivatives of carbohydrates in which the carbohydrate is a polysaccharide and their preparation.
   
   ---

2. claims: 1(part,3,6(part),7(part),11-14(parts)

   Phosphonate derivatives of carbohydrates in which the carbohydrate is a saccharide and their preparation.
   
   ---

3. claims: 1(part),5,6(part),7(part),8,11-14(parts)

   Phosphonate derivatives of carbohydrates in which the carbohydrate is a sugar alcohol and their preparation.
   
   ---

4. claims: 1(part),6(part),7(part),9,10,11-14(parts)

   Phosphonate derivatives of carbohydrates in which the carbohydrate is a monosaccharide and their preparation.
   
   ---

## ANNEX TO THE EUROPEAN SEARCH REPORT
## ON EUROPEAN PATENT APPLICATION NO.

EP 06 02 5517

This annex lists the patent family members relating to the patent documents cited in the above-mentioned European search report.
The members are as contained in the European Patent Office EDP file on
The European Patent Office is in no way liable for these particulars which are merely given for the purpose of information.

24-05-2007

| Patent document cited in search report | | | Publication date | Patent family member(s) | | Publication date |
|---|---|---|---|---|---|---|
| US 3553194 | A | | 05-01-1971 | NONE | | |
| EP 0061686 | A2 | | 06-10-1982 | DE | 3112945 A1 | 07-10-1982 |
| | | | | US | 4413121 A | 01-11-1983 |
| US 4276414 | A | | 30-06-1981 | NONE | | |
| EP 0051182 | A1 | | 12-05-1982 | DE | 3039978 A1 | 03-06-1982 |
| | | | | JP | 57102901 A | 26-06-1982 |
| | | | | US | 4379918 A | 12-04-1983 |
| EP 1260522 | A1 | | 27-11-2002 | AT | 329074 T | 15-06-2006 |
| | | | | AT | 324383 T | 15-05-2006 |
| EP 0025830 | A1 | | 01-04-1981 | CA | 1139747 A1 | 18-01-1983 |
| | | | | DE | 3063489 D1 | 07-07-1983 |
| | | | | FI | 802574 A | 16-02-1981 |
| US 4260738 | A | | 07-04-1981 | NONE | | |
| FR 2795955 | A | | 12-01-2001 | NONE | | |

EPO FORM P0459

For more details about this annex : see Official Journal of the European Patent Office, No. 12/82

**EP 1 932 858 A1**

## REFERENCES CITED IN THE DESCRIPTION

### Patent documents cited in the description

- EP 0917541 A
- US 4260738 A
- US 4297299 A
- EP 1094890 A
- EP 1093541 A
- EP 1060135 A
- EP 0814088 A
- EP 0025830 A
- US 4243479 A
- EP 0401833 A